# EUROPÄISCHE PATENTSCHRIFT

(11) **EP 1 302 394 B1**
(45) Veröffentlichungstag und Bekanntmachung des Hinweises auf die Patenterteilung: **30.11.2005**
(21) Anmeldenummer: 02019626.7
(22) Anmeldetag: 03.09.2002
(51) Int. Cl.: B62J 9/00, B62J 7/04, B62J 1/12

(54) **Motorrad mit daran befestigtem Motorradkoffer**
Motorcycle with a transport case
Motocyclette munie d'un coffre

(30) Priorität: 10.10.2001 DE 10150055
(43) Veröffentlichungstag der Anmeldung: 16.04.2003
(73) Patentinhaber: Bayerische Motoren Werke Aktiengesellschaft, 80809 München (DE)
(72) Erfinder: Heinrich, Edgar, 85354 Freising (DE); Eder, Michael, 81369 München (DE)

(56) Entgegenhaltungen:
- DE-A- 19 841 748
- DE-C- 456 183
- DE-U- 8 022 714
- US-A- 5 271 540
- US-A- 5 497 919
- US-A- 5 931 360
- PATENT ABSTRACTS OF JAPAN vol. 1999, no. 13, 30. November 1999 (1999-11-30) & JP 11 217094 A (HONDA MOTOR CO LTD), 10. August 1999 (1999-08-10)

## Beschreibung

Die vorliegende Erfindung betrifft ein Motorrad gemäß dem Oberbegriff des Patentanspruchs 1.

Ein derartiges Motorrad ist aus der DE 456 183 bekannt.

Aus der DE 198 41 748 A1 ist ein Motorrad bekannt, bei dem im Bereich des Hinterrades auf beiden Seiten jeweils ein Seitenkoffer angeordnet ist. Die Seitenkoffer sind hinsichtlich ihrer Formgebung an das Design der Motorradverkleidung angepasst. An den beiden Motorradkoffem ist motorradmittig ein Topcase" angeordnet, das in seinen Seitenbereichen nach unten an die Seitenkoffer angrenzt.

Aufgabe der Erfindung ist es, ein "Motorradkoffersystem" zu schaffen, das hinsichtlich der Befestigungsmöglichkeiten von Zusatzgepäck optimiert ist.

Diese Aufgabe wird durch die Merkmale des Patentansprüch 1 gelöst. Vorteilhafte Ausgestaltungen und Weiterbildungen der Erfindung sind den Unteransprüchen zu entnehmen.

Das Grundprinzip der Erfindung besteht in einem "Koffersystem" das zusammen mit einer im hinteren Bereich des Motorrads angeordneten Gepäckbrücke eine Ebene bildet. Hierdurch ergibt sich eine verbreiterte, stabile Auflagefläche für zusätzliches Gepäck.

Der bzw. die Motorradkoffer und die Gepäckbrücke sind an ihren Oberseiten nicht vollflächig eben, sondern sind hinsichtlich ihres Design dem übrigen Motorrad angepasst. An der Oberseite des bzw. der Motorradkoffer und der Gepäckbrücke sind mehrere "Erhebungen" vorgesehen, die ihrerseits an ihrer Oberseite eben sind. Zu befestigendes Zusatzgepäck liegt dann primär nur auf den in einer Ebene liegenden Erhebungen auf. Die Erhebungen können vorzugsweise aus einem anderen Material bestehen als der Motorradkoffer. Die Oberseiten der Erhebungen können beispielsweise gummiert oder mit einem anderen rutschfesten Material beschichtet sein, was die Gepäckbefestigung erleichtert.

Zur Befestigung des bzw. der Motorradkoffer am Motorrad sind motorradseitige und kofferseitige zusammenwirkende Befestigungsmittel vorgesehen. Beispielsweise kann an der "inneren" Seitenwand des Motorradkoffers ein hackenartiges Befestigungselement vorgesehen sein, das in ein zugeordnetes motorradseitiges Befestigungselement einhängbar ist.

Vorzugsweise ist das motorradseitige Befestigungselement einstückig mit der Gepäckbrücke verbunden. Dies hat den Vorteil, dass die Gepäckbrücke und das motorradseitige Befestigungselement in einem Arbeitsgang, z.B. als Spritzgussteil herstellbar sind. Somit kann zumindest im oberen Kofferbereich auf ein am Motorradrahmen nachträglich zu befestigendes Befestigungselement für den Koffer verzichtet werden.

An den zusammenwirkenden kofferseitigen bzw. motorradseitigen Befestigungselementen ist vorzugsweise ein Schlossmechanismus zum Festsperren des Motorradkoffers am Motorrad vorgesehen. Das Schloss kann beispielsweise fest in den Motorradkoffer integriert sein.

Nach einer Weiterbildung der Erfindung ist der Motorradkoffer "seitlich ausziehbar". Das heißt, der Motorradkoffer weist ein verschiebliches Wandteil auf, das eine Breitenverstellung des Koffers in Querrichtung des Motorrads ermöglicht. Wenn beispielsweise im Stadtverkehr nicht das gesamte mögliche Koffervolumen benötigt wird, kann der Koffer seitlich zusammengeschoben werden. Hierdurch verringert sich die gesamte "Breite des Motorrads", was zu einer Verbesserung der Fahrsicherheit beiträgt.

Vorzugsweise ist vorgesehen, dass die Gepäckbrücke unter einer abnehmbaren Soziussitzbank angeordnet ist. Wenn der Fahrer alleine fährt, kann die Soziussitzbank abgenommen und die Gepäckbrücke zusammen mit der Oberseite des bzw. der Motorradkoffer als Gepäckauflage verwendet werden.

Im folgenden wird die Erfindung an Hand eines Ausführungsbeispiels im Zusammenhang mit der Zeichnung näher erläutert. Es zeigen:
- Figur 1: eine perspektivische Darstellung einer Gepäckbrücke mit zwei seitlich daran befestigbaren Motorradkoffern; und
- Figur 2: einen Querschnitt durch die Gepäckbrücke und den rechten in Figur 1 dargestellten Motorradkoffer.

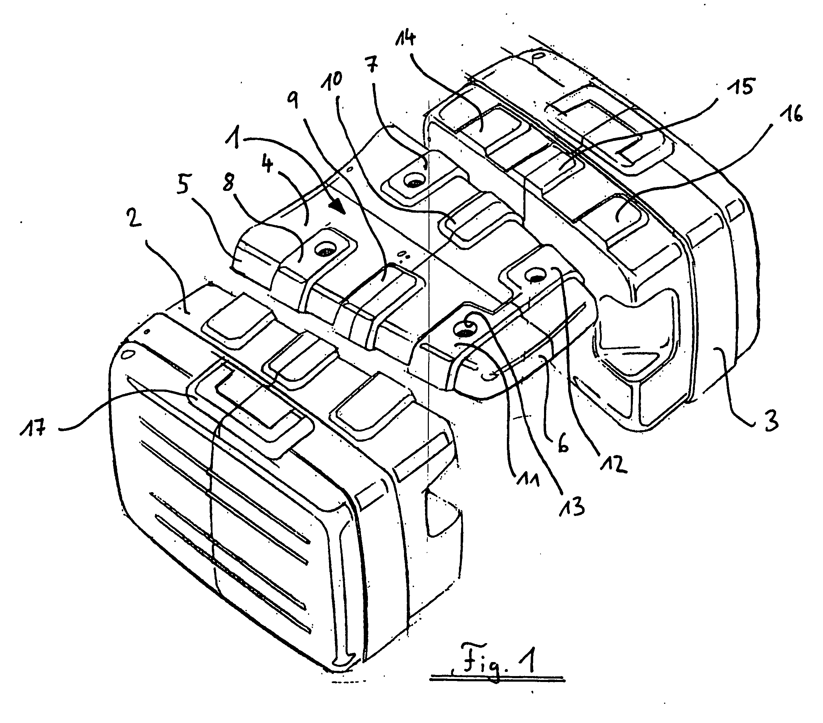

**Figur 1** zeigt eine im Heckbereich eines Motorrads angeordnete Gepäckbrücke 1 und zwei seitlich daran befestigbare Seitenkoffer 2, 3. Die Gepäckbrücke 1 weist eine Grundplatte 4 mit umlaufenden seitlich nach unten abfallenden Rändern 5, 6 auf. Auf der Grundplatte 4 sind mehrere Erhebungen 7 - 12 vorgesehen, deren Oberseiten in einer gemeinsamen Ebene liegen. In den Erhebungen 7, 8, 11, 12 sind jeweils Ausnehmungen 13 vorgesehen, die eine Befestigung einer Soziussitzbank (nicht dargestellt) oder eines "Topcase" auf der Gepäckbrücke 1 ermöglichen.

Die beiden Seitenkoffer 2, 3 weisen an ihrer Oberseite ebenfalls Erhebungen 14 - 16 auf, die hier im wesentlichen in einer "Flucht" mit den Erhebungen 7, 10, 12 der Gepäckbrücke 1 liegen. Wesentlich hierbei ist, dass die Oberseiten der Erhebungen 14 - 16 in einer Ebene mit den Oberseiten der Erhebungen 7 - 12 liegen, so dass sich eine stabile Gepäckauflage für Zusatzgepäck ergibt.

Vollständigkeitshalber sei noch auf Koffergriffe 17 hingewiesen, die seitlich umklappbar sind und die in der hier dargestellten eingeklappten Stellung unterhalb der Oberseiten der Erhebungen 7 - 12 bzw. 14 - 16 liegen.

Die Ausnehmungen 13 ermöglichen alternativ zur Befestigung einer Soziussitzbank auch die Befestigung eines Top case.

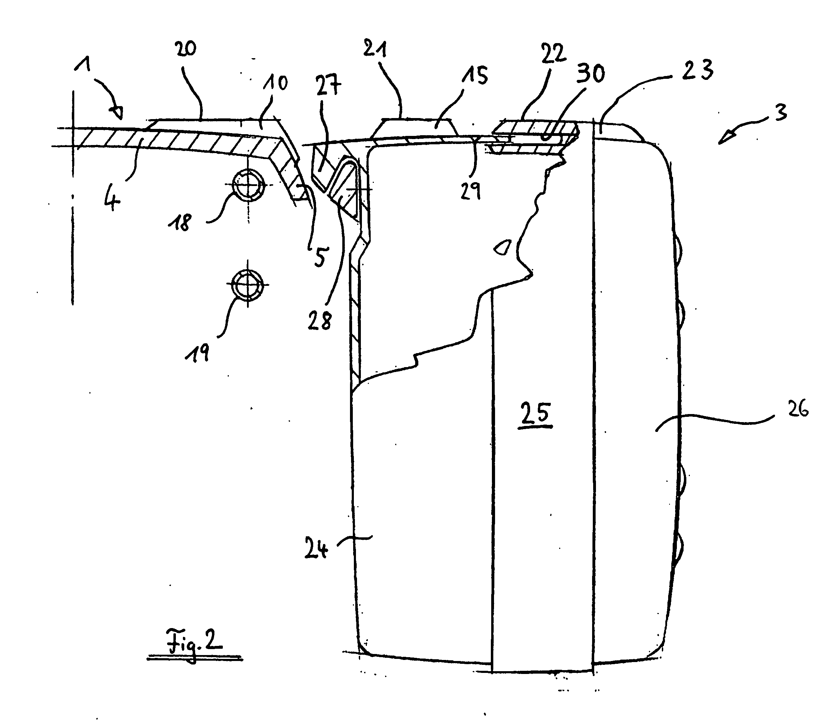

**Figur 2** zeigt eine Schnittdarstellung der Gepäckbrücke 1 und des rechten Seitenkoffers 3. Die Gepäckbrücke 1 ist in hier nicht näher dargestellter Weise am Rahmen 18, 19 des Motorrads befestigt. Es ist ersichtlich, dass die Grundplatte 4 der Gepäckbrücke 1 zum Rand 5 hin schräg abfällt. Die Erhebung 12 weist eine ebene horizontale Oberseite 20 auf, die in einer Ebene mit der Oberseite 21 der Erhebung 15 und der Oberseite 22 einer Erhebung 23 liegt.

Es ist ersichtlich, dass der Seitenkoffer 3 aus drei Elementen besteht, nämlich einem inneren Element 24, einem mittleren Element 25 und einem äußeren Element 26. Im oberen Bereich des inneren Elements 24 ist ein Befestigungshacken 27 vorgesehen, über den der Koffer 3 in einem komplementär gestalteten Befestigungselement 28 eingehängt ist. Das Befestigungselement 28 ist hier einstückig mit der Gepäckbrücke 1 verbunden, was jedoch in der hier-gezeigten Schnittdarstellung nicht erkennbar ist. Die Gepäckbrücke 1 bzw. das Befestigungselement 28 können beispielsweise in einem einzigen Arbeitsgang als Spritzgussteil hergestellt werden. Eine bei herkömmlichen Koffersystemen vorgesehene am Motorradrahmen befestigte Halterung kann somit entfallen.

Aus der Schnittdarstellung des Koffers 3 ist ersichtlich, dass das mittlere Element 25 eine schlitzartige Ausnehmung 30 aufweist, in die ein Seitenwandbereich 29 des inneren Elements 24 einschiebbar ist. Hierdurch ist die Breite des Seitenkoffers 3 verstellbar.

## Patentansprüche

1. Motorrad mit einer oberhalb des Hinterrades vorgesehenen Gepäckbrücke und mindestens einem im seitlichen Hinterradbereich befestigten Motorradkoffer, wobei
eine Oberseite (21, 22) des Motorradkoffers (2, 3) im wesentlichen in der selben Ebene liegt wie eine Oberseite (20) der Gepäckbrücke (1), **dadurch gekennzeichnet, dass** an der Oberseite der Gepäckbrücke (1) und an der Oberseite des Motorradkoffers (2, 3) mehrere Erhebungen (7 - 12; 14 - 16) vorgesehen sind, die an ihrer Oberseite (20 - 22) eben sind, wobei die Oberseiten (20 - 22) der Erhebungen (7 - 12; 14 - 16) in einer Ebene liegen und Auflageflächen für Gepäck bilden

2. Motorrad nach Anspruch 1,
**dadurch gekennzeichnet, dass** an einer motorradseitigen Seitenwand des Motorradkoffers (2, 3) mindestens ein hackenartiges Befestigungselement (27) vorgesehen ist.

3. Motorrad nach Anspruch 2,
**dadurch gekennzeichnet, dass** das hackenartige Befestigungselement (27) zur Unterseite des Motorradkoffers (2, 3) hin offen ist.

4. Motorrad nach einem der Ansprüche 2 oder 3, **dadurch gekennzeichnet, dass** ein motorradseitiges Befestigungselement (28) vorgesehen ist, das dem hackenartigen Befestigungselement (27) des Motorradkoffers (2, 3) zugeordnet ist.

5. Motorrad nach Anspruch 4,
**dadurch gekennzeichnet, dass** das motorradseitige Befestigungselement (28) an der Gepäckbrücke (1) befestigt ist.

6. Motorrad nach einem der Ansprüche 4 oder 5,
**dadurch gekennzeichnet, dass** das motorradseitige Befestigungselement (28) einstückig mit der Gepäckbrücke (1) verbunden ist.

7. Motorrad nach einem der Ansprüche 2 bis 6,
**dadurch gekennzeichnet, dass** ein Schlossmechanismus zum Festsperren des Motorradkoffers (2, 3) am Motorrad vorgesehen ist, der mit dem hackenartigen Befestigungselement (27) und dem motorradseitigen Befestigungselement (28) zusammenwirkt.

8. Motorrad nach einem der Ansprüche 1 bis 7,
**dadurch gekennzeichnet, dass** der Motorradkoffer (2, 3) ein verschiebliches Wandteil (25, 26) aufweist, zur Verstellung der Breite des Motorradkoffers (2, 3) in Querrichtung des Motorrads.

9. Motorrad nach einem der Ansprüche 1 bis 8,
**dadurch gekennzeichnet, dass** an der Gepäckbrücke (1) Befestigungselemente (13) zur Befestigung einer Soziussitzbank vorgesehen sind, wobei die Gepäckbrücke (1) bei abgenommener Soziussitzbank als Gepäckablage dient.

## Claims

1. A motorcycle with a luggage rack above the rear wheel and at least one motorcycle case fastened in the lateral rear-wheel region, wherein
a top surface (21, 22) of the motorcycle case (2, 3) lies substantially in the same plane or at the same level as a top surface (20) of the luggage rack (1), **characterised in that** the top surface of the luggage rack (1) and the top surface of the motorcycle case (2, 3) have a number of raised parts (7 - 12; 14-16) which are flat on top (20 - 22), wherein the tops (20 - 22) of the raised parts (7 - 12; 14 - 16) lie in a plane and form supporting surfaces for luggage.

2. A motorcycle according to claim 1, **characterised in that** at least one hoe-like fastening element (27) is provided on a side wall of the motorcycle case (2, 3) facing the motorcycle.

3. A motorcycle according to claim 2, **characterised in that** the hoe-like fastening element (27) is open towards the underside of the motorcycle case (2, 3).

4. A motorcycle according to claim 2 or 3, **characterised in that** a fastening element (28) on the motorcycle is provided and associated with the hoe-like fastening element (27) of the motorcycle case (2, 3).

5. A motorcycle according to claim 4, **characterised in that** the fastening element (28) on the motorcycle is fastened to the luggage rack (1).

6. A motorcycle according to claim 4 or 5, **characterised in that** the fastening element (28) on the motorcycle is connected to and integral with the luggage rack (1).

7. A motorcycle according to any of claims 2 to 6, **characterised in that** a mechanism is provided for locking the motorcycle case (2, 3) to the motorcycle and co-operates with the hoe-like fastening element (27) and the fastening element (28) on the motorcycle.

8. A motorcycle according to any of claims 1 to 7, **characterised in that** the motorcycle case (2, 3) has a movable wall part (25, 26) for adjusting the width of the motorcycle case (2, 3) in the transverse direction of the motorcycle.

9. A motorcycle according to any of claims 1 to 8, **characterised in that** elements (13) for fastening a pillion seat are provided on the luggage rack (1), wherein the luggage rack (1) serves as a luggage compartment when the pillion seat is removed.

## Revendications

1. Motocyclette avec un pont porte-bagages prévu au-dessus de la roue arrière et au moins un coffre fixé dans la zone latérale arrière, la face supérieure (21, 22) du coffre (2, 3) étant essentiellement dans le même plan que la face supérieure (20) du pont porte-bagages (1),
**caractérisée en ce que**
sur la face supérieure du pont d'emballage (1) et sur la face supérieure du coffre (2, 3) sont prévues plusieurs saillies (7 - 12 ; 14 - 16) dont les faces supérieures (20 - 22) planes, se trouvent dans un même plan et constituent des surfaces d'appui pour les bagages.

2. Motocyclette selon la revendication 1,
**caractérisée en ce que**
sur une paroi latérale du coffre (2, 3), située côté moto, est prévu un moyen de fixation (27) en forme de crochet.

3. Motocyclette selon la revendication 2,
**caractérisée en ce que**
le moyen de fixation (27) en forme de crochet est ouvert en direction de la partie inférieure du coffre (2, 3).

4. Motocyclette selon la revendication 2 ou 3,
**caractérisée en ce qu'**
il est prévu un moyen de fixation (28) côté moto associé au moyen de fixation (27) en forme de crochet côté coffre (2, 3).

5. Motocyclette selon la revendication 4,
**caractérisée en ce que**
le moyen de fixation (28) côté moto, est fixé au pont porte-bagages (1).

6. Motocyclette selon la revendication 4 ou 5,
**caractérisée en ce que**
le moyen de fixation (28) côté moto, est monobloc avec le pont porte-bagages (1).

7. Motocyclette selon une des revendications 2 à 6,
**caractérisée en ce qu'**
il est prévu, pour bloquer le coffre (2, 3) sur la motocyclette, un mécanisme à serrure qui coopère avec un moyen de fixation (27) en forme de crochet et avec le moyen de fixation (28) situé côté moto.

8. Motocyclette selon une des revendications 1 à 7,
**caractérisée en ce que**
le coffre (2, 3) présente une partie de paroi (25, 26) coulissante permettant de régler la largeur du coffre de moto (2, 3) transversalement par rapport à la moto.

9. Motocyclette selon une des revendications 1 à 8,
**caractérisée en ce que**
sur le pont porte-bagages (1) des éléments de fixation (13) sont prévus pour fixer un siège de passager, le pont porte-bagages (1) servant de surface d'appui aux bagages quand le siège est retiré.
